# EUROPEAN PATENT SPECIFICATION

(11) **EP 2 119 183 B1**
(45) Date of publication and mention of the grant of the patent: **23.08.2017**
(21) Application number: 07848211.4
(22) Date of filing: 12.12.2007
(51) Int. Cl.: H04L 12/28, H04W 76/02

(54) **COMMUNICATION SYSTEM**
KOMMUNIKATIONSSYSTEM
SYSTÈME DE COMMUNICATION

(30) Priority: 13.12.2006 FI 20065799
(43) Date of publication of application: 18.11.2009
(73) Proprietor: Telia Company AB, 169 94 Solna (SE)
(72) Inventor: LEUKKUNEN, Petri, 90540 Oulu (FI)
(74) Representative: Kolster Oy Ab
(86) International application number: PCT/FI2007/050680
(87) International publication number: WO 2008/071848

(56) References cited:
- WO-A2-2004/092863
- US-A1- 2002 072 375
- US-A1- 2002 132 632
- US-A1- 2002 197 998
- US-A1- 2003 236 082

## Description

### FIELD OF THE INVENTION

The present invention relates to communication systems, and more particularly to a method for applying increased transmission capacity in communication.

### BACKGROUND OF THE INVENTION

Telecommunications users in general hope that the services they use are ubiquitously and uniformly available to them. In the context of the variety of new technologies, achieving such requirement has become quite a challenging task.

The number of different services, and service providers has been increasing exponentially, and numerous different concepts and architectures for providing services have been introduced. The tendency seems to be that the service providers aim to focus on the substance of the service, and try to manage the service such that least adjustment is necessary to the service itself due to the technological environment in which the service is applied. For example, a provider of video content on a particular subject (e.g. F1 car racing) would prefer to concentrate in the subject of motor sports and not spend a lot of time and effort in modifying the service technically to the various access mechanisms and receiving terminals in the user end. On the other hand, the service providers do see that the smaller the group that can possibly render the content, the smaller the potential for successful business from the service provision.

Basically not many of the technologies *per se* are restrictive in nature, but the combination of a selected technology and the user equipment applying the technology is pivotal for the end-to-end performance of the service. The user equipment is typically a result of exclusionary selections that the user makes at the time of acquiring the device. For example, in choosing a small-size device for easy portability, user is expected to accept a smaller keyboard for inputting information, lesser processing capacity and smaller screen size. Similarly, in choosing a mobile device, user chooses to move freely and thus access the services ubiquitously in the coverage area, but at the same time assumedly accepts a more limited transmission capacity than what would be available through landline connections.

The problem of providing additional transmission capacity in mobile access or in congested last mile laps has been widely discussed in the state of the art. One of the proposed solutions shows sharing the transmission capacity of a group of users and operating the use of the shared transmission resource in such a way that an increased throughput, either temporally for an individual service flow, or in average for the whole system is achieved. This operation is typically implemented as a separate master device that controls an amount of fixed last mile transmission lines to the user terminals. In some solutions such master device controls a higher capacity upstream channel and shares this with a group of terminals using a piggybacked bandwidth requesting method, or polling terminals for bandwidth increase or decrease.

In other prior art solutions, in the transmission line between the user equipment and the less congested part of Internet system is provided a standalone bandwidth-sharing device that is capable of aggregating the available bandwidth of defined last mile transmission lines. These defined transmission lines relate to a group of other user equipment with similar bandwidth-sharing devices coupled to them, and the aggregation is achieved through separate communication of these additional bandwidth-sharing devices.

In such conventional solutions, control of the shared resource is based on pre-established, fixed roles of specific standalone devices. Such solutions do not allow dynamic, ad hoc sharing sessions of different user groups. In addition, at least some of the solutions also require adjustments to the operations in the remote end and are therefore not that applicable in generic service provision concepts.

US 2002/0132632 A1 discloses a method for transferring high rate data between a first and second communications device. A handset wants to be provided with a high data rate service which cannot be carried by the slow speed communications link provided by the cellular network. A service provider requests a server to send high data rate service in a stream of packets. The service provider reconstructs the stream and re-packetizes the data.

### SUMMARY OF THE INVENTION

An object of the present invention is thus to provide a solution so as to alleviate the above disadvantages in use of telecommunication services. The objects of the invention are achieved by a method, system, communication device, serving node, computer program product, computer program distribution medium that are characterized by what is stated in the independent claims. The preferred embodiments of the invention are disclosed in the dependent claims.

The invention is based on the idea of sharing the transmission capacity of primary connections of a group of participating user equipment. The shared data is delivered through secondary connections between the participating user equipment (slaves) and a control node (master). The primary connections are managed in a serving node such that the shared operation remains transparent to the other endpoint.

### BRIEF DESCRIPTION OF THE DRAWINGS

In the following the invention will be described in greater detail by means of preferred embodiments with reference to the attached drawings, in which
Figure 1 is a logical representation of system architecture of a communication system;
Figure 2 illustrates the functional entities of the system of Figure 1;
Figure 3 shows a flow chart illustrating method according to the invention embodied in a system of Figure 2;
Figure 4 provides a functional description of user equipment;
Figure 5 shows a flow chart illustrating method according to the invention embodied in master user equipment of Figure 2;
Figure 6 shows a flow chart illustrating method according to the invention embodied in slave user equipment 121, 122 of Figure 2;
Figure 7 provides a functional description of an application node;
Figure 8 shows a flow chart illustrating a method according to the invention embodied in an application node 123 of Figure 2; and
Figures 9A and 9B illustrate further embodiments of the invention.

### DETAILED DESCRIPTION OF THE INVENTION

It is appreciated that the following embodiments are exemplary. Furthermore, although the specification may in various places refer to "an", "one", or "some" embodiment(s), reference is not necessarily made to the same embodiment(s), or the feature in question does not only apply to a single embodiment. Single features of different embodiments may be combined to provide further embodiments.

The present invention is applicable to a communication system that provides delivery of data steams between at least two communicating endpoints. A variety of systems applying a variety of communication technologies may be used separately or in combinations to implement the embodiments of the invention. Communication systems and technologies evolve continuously, and embodiments of the invention will require a number of modifications obvious for a person skilled in the art. Therefore all words and expressions of this specification should be interpreted broadly, as they are intended merely to illustrate, not to restrict, the embodiments.

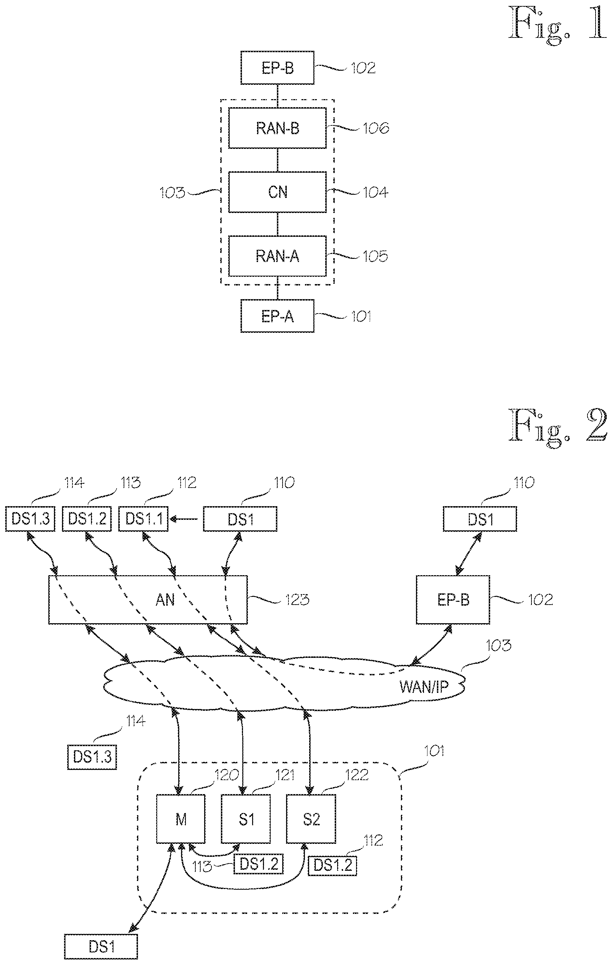

In the following, some embodiments of the invention will be described by means an exemplary communication system that provides wide area connectivity to mobile user equipment, however, without restricting the embodiment to any particular connectivity type. An embodiment of a communication system according to the present invention is illustrated in Figure 1. It should be noted that only elements necessary for illustrating the invention are shown. It is apparent to a person skilled in the art that actual systems comprise other functions and structures that are not necessarily discussed or depicted in more detail herein.

The configuration shown in Figure 1 is a logical representation of basic system architecture of an embodiment of the present invention and identifies functional entities thereof. Each of the shown entities represents a grouping of functional entities. On the other hand, each of the functions may be realized in a single physical entity or be distributed over multiple physical entities.

Figure 1 illustrates a first endpoint 101 and a second endpoint 102 that are configured to communicate over a communication network 103. A communication network 103 typically comprises at least one or more core networks 104 that provide network services, and one or more access networks 105, 106 through which user equipment access these core network services. Core network 104 typically represents a transmission facility that interconnects lower-speed distribution networks, like access networks. Access networks 105, 106 provide final transmission laps to the user equipment 101, 102. The first and the second endpoints represent herein system elements that source and sink data streams of a defined protocol layer. In the current embodiment an endpoint may be implemented in any fixed, mobile or portable device with connectivity to at least one access network of the communication network 103.

As an example of access network connectivity, an arrangement where user equipment accesses services of the core network over a radio access network is described in the following in more detail. However, it should be noted that the invention is not limited to radio access, but is applicable over a variety of access network types.

Mobile user equipment is primarily arranged to operate in a cellular network. By handing over the connection from one cell to another cell, mobile user equipment may access network services also during movement. As a comparison, a portable station is considered to move from point to point but may only used at a fixed point. It should be noted that even if the invention is illustrated in a context of a mobile station, it may be applied in mobile, portable stations and even fixed stations.

Mobile user equipment is a device that functions within a radio access network infrastructure together with the software, applications, and content associated with the device, and thereby provides to its user connectivity to the network infrastructure. A user equipment may be a simple terminal that is able to communicate with one media type service (for example, speech) only or it can range to a terminal for diverse services that acts as a service platform and supports loading and execution of various functions related to these services.

When used for subscribed services, user equipment typically comprises actual terminal equipment and an identification element that allows associating the subscriber with the terminal element he or she is using. The element may be any type of data storage accessible to the terminal equipment for retrieving defined subscriber related data. As is clear to a person skilled in the art, the identification element may be implemented in various ways. One example is a detachably connected identification card, also called a subscriber identity module. The subscriber identity module may be, for example, a smart card that substantially holds the subscriber identity, performs authentication algorithms, and stores authentication and encryption keys and other subscription information that is needed at the user equipment. The terminal equipment may be any equipment or a combination of several pieces of equipment, connected to provide a connection with the access network. In the current exemplary embodiment of accessing the radio access network, the terminal equipment may be implemented as any mobile equipment or any type of computer device to which a fixed or detachable radio interface element (for example, a card phone) has been coupled to provide a connection to the radio access network. In the present embodiment the term user equipment thus refers to an exemplary entity formed by a subscriber identity module and the mobile equipment.

A communication network 104 may comprise a number of radio network subsystems (RNS) 105 acting as an access network. Each RNS corresponds to a coverage area formed by a number of cells. RNS may comprise one or more radio network controllers and one or more base tranceiver stations. The radio network controller is a network node responsible for the control of the radio resources of one or more base tranceiver stations and interfaces the core network 104. The base tranceiver station performs air interface layer processing (for example, channel coding and interleaving, rate adaptation, etc.) to interface with mobile stations.

Figure 2 illustrates the functional entities in the embodiment of the system according to the present invention. Figure 2 shows again the first endpoint 101, the second endpoint 102, and the communication network through which the first endpoint and the second endpoint can exchange information. Information exchange is advantageously performed as data streams 110, 115 of constant or varying format that during transmission may be processed for delivery in any type of bearer and in the receiving end recovered from the respective bearer for rendering. A data stream is advantageously implemented as digital data, but may comprise any type of coded information.

In the embodiment of Figure 2, the first endpoint 101 is shown to comprise a number of user equipment 120, 121, 122. In addition, the system configuration of Figure 2 shows an application node 123 with which each of the user equipment 120, 121, 122 can exchange information over the communication network 103. The application node may be implemented as an element of the core network or as an element that accesses the core network through an access network. The access network used by the application node 123 may be same as or different from the access network used by any of the user equipment. The application node may be implemented, for example, as a standalone entity for the purpose of the operations described here, integrated in an application server that provides also one or more other application services, or integrated to the second endpoint. Other implementation configurations are possible within the scope of protection.

The different user equipment 120, 121, 122 may exchange information with the application node 123 through the same access network, or through different access networks. For example, both user equipment 121, 122, could be GSM/GPRS mobile stations (Global System for Mobile Communications/General Packet Radio System) applying Um air interface specifications, or user equipment 121 could be a GSM/GPRS mobile station applying Um air interface specifications, and user equipment 122 a 3G user equipment applying Uu air interface specifications.

According to the invention the user equipment 120, 121, 122 of the first endpoint are configured such that they are additionally capable to exchange information over secondary connections. Specifically, the first endpoint comprises a control node 120, with which the other user equipment may exchange information over at least one secondary connection. A secondary connection of user equipment in this context refers to a connection that may be controlled separately from the primary connection and the connectivity type of which is different from the connectivity type used for communication with the application node through the access network. In an advantageous embodiment, the secondary connection is implemented as a local connection. Local connection in this context refers to a connection that may be established by the communicating parties, without mediating network elements, or to a connection that is mediated by one or more locally controlled network elements. However, other connections differing in the primary connection type and controllable independently from the primary connection are possible within the scope of protection. For example user equipment 120, 121, 122 may be formed by means of mobile user equipment and a personal computer coupled together. The secondary connection could in such case be implemented over local area network (LAN).

In the embodiment of Figure 2, the secondary connection is shown as a local connection. Examples of such local connection types comprise at least the following technologies: Bluetooth, Infrared Data Association (IrDA), Radio Frequency Identification (RFID), Digital Enhanced Cordless Telecommunications (DECT), Dedicated Short Range Communications (DSRC), HIPERLAN, HIPERMAN, Institute of Electrical and Electronics Engineers (IEEE) 802.11, Ultra-wideband (UWB), Institute of Electrical and Electronics Engineers (IEEE) 802.16 (WiMAX), xMax, ZigBee, Institute of Electrical and Electronics Engineers (IEEE) 802.16 (WPAN), Wireless USB. It should be noted that the list is not exhaustive and should not be interpreted restrictively.

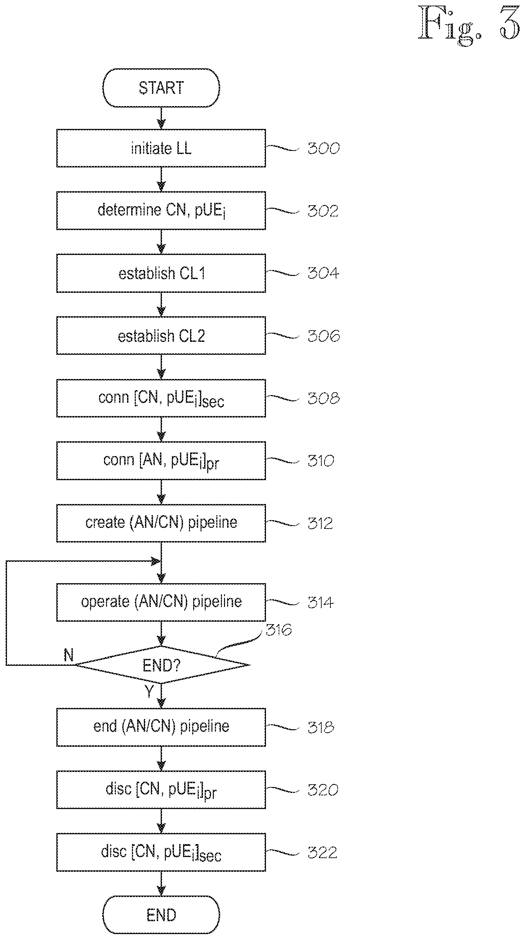

In the following, operations of the system will be described in more detail. Figure 3 shows a flow chart illustrating method according to the invention embodied in a system of Figure 2. It is appreciated that the steps, messages and related functions described in Figure 3 are not in absolute chronological order, and some of the steps may be performed simultaneously or in an order that differs from the one shown in Figure 3. Other functions can also be executed between the steps or within the steps and other messages sent between the showed messages. Especially control logic for checking the success of individual steps, and in the cause of failure calling an appropriate error function may be added to the procedures. Some of the steps or part of the steps can also be left out or replaced by a corresponding step or part of the step.

The embodied method is for transferring data streams of a logical link between the first endpoint and the second endpoint. The method begins in the first endpoint with initiation (step 300) of a logical link between the first endpoint and the second endpoint. The situation or event that triggers initiation of the logical link may originate from, for example, one of the users of the user equipment 120, 121, 122 of the first endpoint, from the second endpoint, from the application node, or from practically any source able to in some way access the procedures of the user equipment 120, 121, 122 in the first endpoint. However, at some point in some element of the first endpoint a procedure for initiating the logical link will be triggered. In the exemplary case of the embodiment Figure 2, a group of users residing in a defined location, for example a meeting room, become aware of a particular piece of content that would be of interest to all of them. Due to the limited transmission capacity available through the primary connection type, i.e. the wide area connectivity of any of the available user equipment (for example, due to the access technology used, or the capabilities of the user equipment) receiving the content into any individual user equipment would not be viable. It is noted, however, that in combination, the resources of the user equipment would, however, be appropriate for rendering the content.

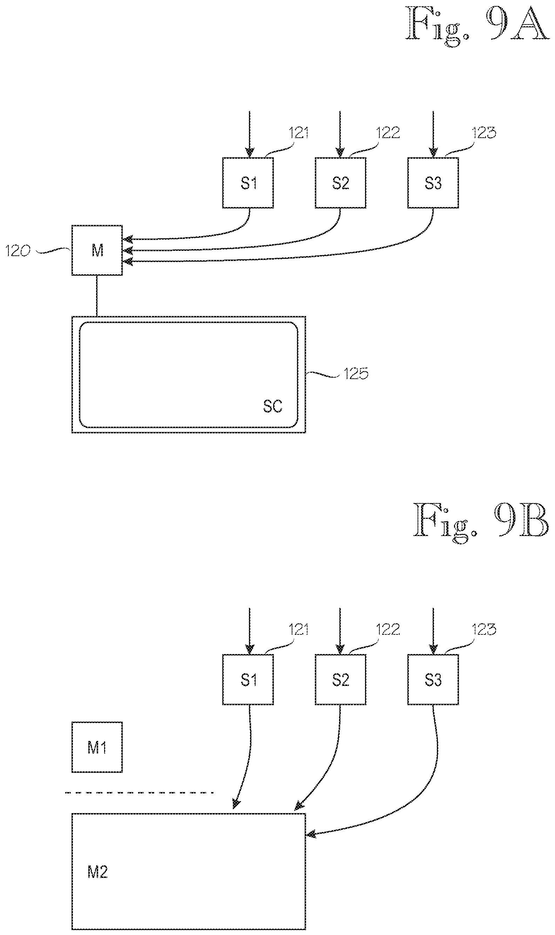

Thus, the logical link creation in an exemplary use case related to the embodiment of Figure 2 is initiated as a response to a command given through the user interface of the user terminal 120. This user equipment is then also determined (step 302) to be a control node CN that controls the procedures associated with the logical link in the first endpoint. In Figure 2, user equipment 120 is thus denoted with M (master). It is clear that other configurations are possible within the scope of protection. For example, the control node may be any of the other user equipment 121, 122, or some other terminal that is able to communicate locally with user equipment at close proximity, and comprises a useful functionality in respect of the content related to the logical link. Such case is discussed in more detail with Figure 9. It is also clear that the initiation command does not imply that the user equipment becomes the control node. Control of the logical link procedures may be assigned to any of the user equipment by agreement, or on the basis of a predefined criterion. For example, user equipment that provides an optimal selection of logical connectivity types may be chosen to master the logical link procedure, even if the initiation was made from another user equipment.

In the exemplary embodiment of Figure 3, the secondary connectivity type provides for local communication. Accordingly, the determined master equipment begins to check the possibilities for local communication with the other user equipment within its reach, and on the basis of the possibilities, determines (step 302) a group of one or more participating user equipment with which it is capable of exchanging information locally. In Figure 2, user equipment 121, 122 are thus denoted with S (slave) to show that their logical link operations are subordinate to operations of user equipment 120.

When the participants in the first endpoint are clear, the master establishes (step 304) a first communication link CL1 to the application node 123 over a defined connectivity type, here the wide area connectivity. In case the master is equipped with wide area connectivity, the first communication link is advantageously made over that particular wide area connectivity type. In case the master is a terminal without wide area connectivity, it may establish the first communication link to the application node through one of its slaves.

In order to extend the communication link all the way to the second endpoint, the application node 123 establishes (step 306) a second communication link to the second endpoint 102. The connectivity type used in the second communication link is not relevant to the invention. Advantageously the second communication link provides a capacity that matches with or exceeds the capacity of the first communication link such that no unpleasant mismatch of transmission pipelines is created. Advantageously, as will be discussed in more detail later on, the second end does not necessarily need to know that it actually communicates with an intermediate application node.

Since the transmission capacity presently available is not yet appropriate for the first communication link, the master creates a local connection (step 308) to the participating user equipment determined in step 302. In creating the local connection to a slave, the master CN informs the slave pUEᵢ on the logical link identity, determines the transmission resource that becomes available for the purpose of the logical link, requests the respective participating user equipment pUEᵢ to create to the application node AN a connection using a wide area connectivity, and associate the connection with the logical link. Accordingly, the slaves pUEᵢ create wide area connections (step 310) to the application node AN using their own respective wide area connectivity type. As discussed above, the connectivity types may be the same or different. Wide area connection setup procedures are well known to a person skilled in the art and will not be separately discussed herein. Logical Link identity information can be carried as application information between a terminal application in user equipment 121 and a server application in the application node 123.

When all participating user equipment have been contacted and instructed, and the resource from the joint operation of the master and the slaves is available, the master completes the creation of the first communication link by means of an appropriate information and acknowledgement procedure, during which the application node AN becomes informed on the identities of the participating user equipment pUEi and advantageously on any other information necessary for the joint operation. This creates (step 312) between the master and the application node a combined pipeline whose potential transmission capacity corresponds with the combined transmission capacity of all the participating user equipment.

In the second endpoint any authorization, admission, validation, charging, etc. related operations are performed on the basis of the identity of the first endpoint. Since the first endpoint is typically (and also advantageously) an ad hoc group of user equipment with appropriate local access, the identity information of this ad hoc group is preferably controlled in the application node. The framework according to which the identity of the first endpoint is determined and according to which charging records related to the logical link are created may be predefined in the server. For example, it may be agreed that towards the second end the application node operates with the identity information provided by the master, and the charging records of all the participating user equipment are also directed to the identity of the master. Alternatively, the charging records may be created to the identities of the slaves on the basis of actual transmissions of each slave. On the other hand, the master and the application node may be configured to agree on the identity information and the charging policy during the creation of the combined pipeline, on a case-by-case basis.

Accordingly, when the logical link between the first endpoint and the second endpoint has been completed, and a data stream exists in the second endpoint for delivery to the first endpoint, from the identity point of view, the second endpoint operates as if it was communicating directly with one subscriber/client, and from the addressing point of view, the second operator operates over the second communication link as if the client resided in the application node. Operation (step 314) of the combined pipeline has been illustrated by means of such delivery of a data stream DS1 110 through the embodied system of Figure 2.

For example, let us assume that the logical link is created for delivering real time video to a meeting room where users of user equipment 120, 121, 122 reside. In completing the first communication link and the associated combined pipeline, the master has provided the application node with its own identity data, at least to the extent it is required for accessing the video data service of the second endpoint. Through the second communication link, the application node sends a request for a specific video data content, and provides the identity data of the master.

A video application in the second endpoint checks that the master's identity entitles to accessing the video content, and if yes, creates a data stream DS1 110 associated with the logical link established for the communication and sends the data stream DS1 110 to the application node 123 over the second communication link associated with the logical link. According to the invention, the application node divides the data stream DS1 110 into separate information blocks (DS1.1) 112, (DS1.2) 113, (DS1.3) 114, addresses each of the blocks to a separate participating user equipment 120, 121, 122 in the first endpoint, and sends the separate information blocks over the separate wide area connections of the respective participating user equipment 120, 12, 122 in the first endpoint.

In the first endpoint, when participating user equipment 121 receives an information block (DS1.2) 113, it detects that the information block is associated with the logical link and sends the received information block (DS1.2) 113 over the local connection to the control node 120 (master). The control node 120 thus receives the information blocks 112, 113, 114 over the connections of all the participating users 120, 121, 122,and combines them into one recovered data stream DS1. Thus the data stream DS1 from the second endpoint to the first endpoint has been delivered over the communication system using in the capacity limited leg (here the air interface) combined communication resource of two or more user equipment. With the embodied arrangement, the combination of resources is possible within any group of two or more user equipment without specific prior arrangement between the user equipment. The arrangement is transparent such that an endpoint (here: the second endpoint) may operate normally without any knowledge on the use of combined resource in the other end.

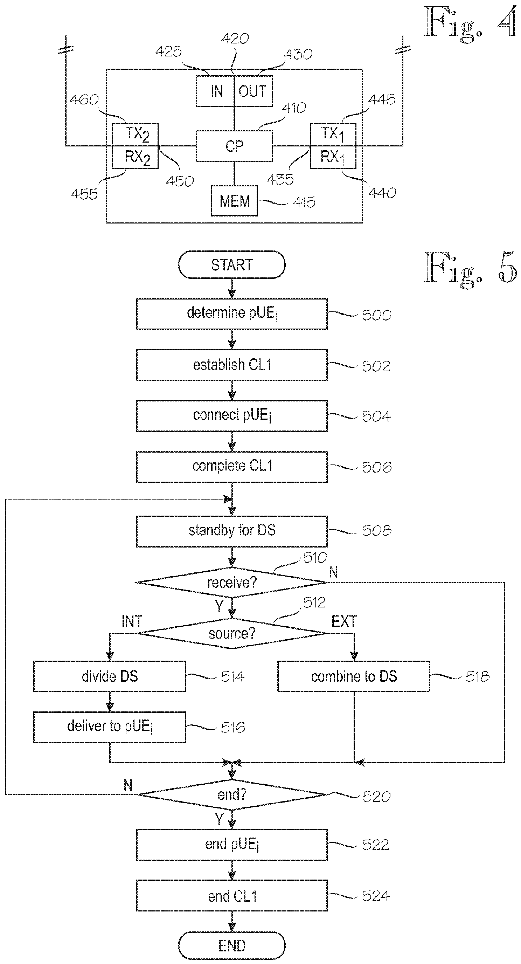

The implementation of the described mechanisms in user equipment is illustrated by referring to Figure 4 that comprises a functional description of user equipment. The user equipment UE comprises a processing unit 410, an element that comprises an arithmetic logic unit, a number of special registers and control circuits. The processing unit may be implemented as a single integrated circuit or as a combination of a number of integrated circuits. Connected to the processing unit is a memory unit 415, a data medium where computer-readable data or programs or user data can be stored. The memory unit typically comprises storage elements that allow both reading and writing (RAM), and storage elements whose contents can only be read (ROM). The user equipment UE also comprises a user interface block 420 with input unit 425 for inputting data by the user for internal processing in the unit, and output means 430 for outputting user data from the internal processes of the unit. Examples of said input means comprise a keypad, or a touch screen, a microphone, or the like. Examples of said output means comprise a screen, a touch screen, a loudspeaker, or the like.

The user equipment UE also comprises a communication unit 435 of a primary access type configured with receiving unit 440 for receiving information from the interface of the primary access type and processing it for inputting to the processing unit 410, as well as with transmitting unit 445 for receiving information from the processing unit 410, and processing it for sending via the interface of the primary access type. The user equipment UE according to the embodiment of the invention also comprises a communication unit 450 of the secondary access type configured with receiving unit 455 for receiving information from the interface of the second access type and processing it for inputting to the processing unit 410, as well as with transmitting unit 470 for receiving information from the processing unit 410, and processing it for sending via the interface of the secondary access type. The implementation of such communication units is generally known to a person skilled in the art.

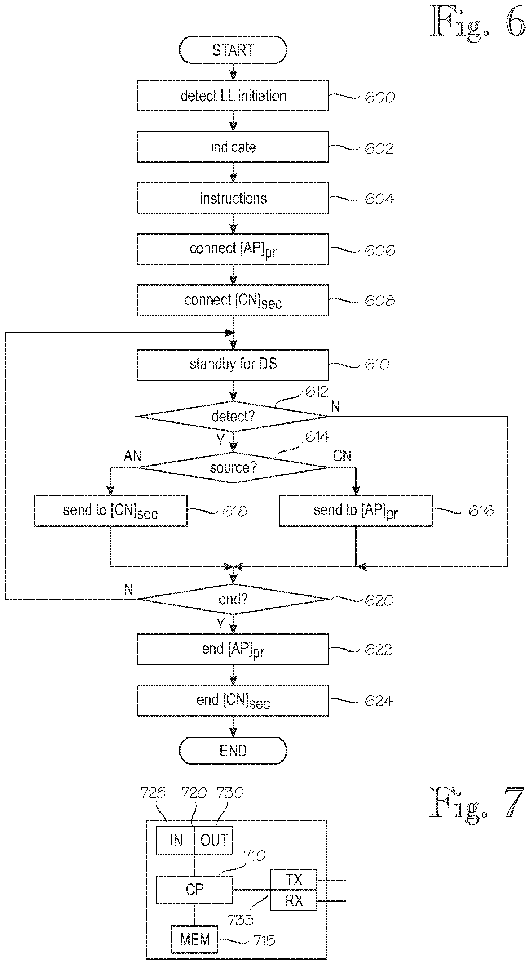

In the above described embodiments the communication unit 435 of the primary access type may be implemented as a radio transceiver of a mobile terminal, and the communication unit 450 of the secondary access type may be implemented as any equipment for local communication, for example Bluetooth, device, embedded into the user equipment. The processing unit 410, memory unit 415, user interface block 420, primary and secondary communication units 435, 450 are electrically interconnected for performing systematic execution of operations on the received and/or stored data according to predefined, essentially programmed processes of the unit. In a solution according to the invention, the operations comprise the functionality of the user equipment UE as described above and also in the following Figures 5 and 6.

Figure 5 shows a flow chart illustrating a method according to the invention embodied in master user equipment 120 of Figure 2. The method of Figure 5 begins at the stage where establishment of the logical link between the first endpoint and the second endpoint has been triggered and the user equipment in question has been selected as a control node. For example, the logical link creation has been initiated as a response to a command given through the user interface of the user terminal 120. As in the method of Figure 3, the user equipment begins to check the possibilities for local communication with the other user equipment within its reach, and on the basis of the possibilities, determines (step 500) a group of one or more participating user equipment with which it is capable of exchanging information locally. The determination is performed in a way typical for the type of connectivity used for local communication. Advantageously it is possible to automatically detect available user equipment with appropriate proximity, but other methods are possible, as well. For example, the users of participating user equipment may be provided with a menu selection that generates an enrolment message to an address that is prompted from the user. The connectivity type used communicating with the participating user equipment may be the same (for example, Bluetooth) or the master user equipment may be configured with a number of connectivity types in order to communicate parallelly with a number of different types of user equipment.

When the participating user equipment are determined, the master establishes (step 502) a first communication link CL1 to the application node over a defined wide area connectivity type. As earlier stated, in case the user equipment is equipped with wide area connectivity, the first communication link is advantageously made over that particular wide area connectivity type. In case the user equipment is a terminal without wide area connectivity, it may establish the first communication link to the application node through one of its slaves.

In order to combine the transmission resources of the participating user equipment, the user equipment creates a local connection (step 504) to the participating user equipment in proximity. In creating the local connection to a slave, the user equipment informs the participating user equipment pUEᵢ on the logical link identity, determines the transmission resource that becomes available for the purpose of the logical link, requests the respective participating user equipment to create to the application node a connection using the wide area connectivity, and associate the connection with the logical link.

When all participating user equipment have been contacted and instructed, and the resource available from the joint operation of the master and the slaves, the user equipment completes (step 506) the creation of the first communication link by means of an appropriate information and acknowledgement procedure, during which the application node becomes informed on the identities of the participating user equipment and advantageously on any other information necessary for the joint operation. At this point, a combined pipeline whose potential transmission capacity corresponds with the combined transmission capacity of all the participating user equipment is created, and the user equipment becomes standby (step 508) for detecting data streams associated with the logical link.

When the user equipment detects a data stream (step 510) associated with the logical link it identifies its source (step 512). If the data stream comes through the internal processes of the user equipment, it is a data stream for transmission. In this case the user equipment divides (step 514) the data stream into separate information blocks and delivers (step 516) these information blocks through the communication unit of the secondary access type to the participating user equipment. The information blocks may be of similar, or they may be formed to match with the transmission resource available through different participating user equipment. If the data stream comes from an external source through the communication unit of the primary access type (e.g. from the application node), or the secondary access type (e.g. from any of the participating user equipment), the user equipment interprets it as an information block divided from the data stream associated with the logical link. The user equipment thus combines (step 518) the information block with the other information blocks received by it or by the other participating user equipment.

The procedure for receiving the separate information blocks, storing them appropriately for reconstructing the data stream between the first endpoint and the second endpoint may be implemented in several ways, generally known to a person skilled in the art. For example, the node responsible of dividing the data streams may be configured to include in each information block an order number or other identifier that indicates the standing of the information block in respect of the data stream. The user equipment acting as master may then be configured with a buffer where received information blocks are first stored and from which successive information blocks are retrieved at reconstructing the original data stream.

After processing the data stream, the user equipment checks (step 520) whether the logical link may be ended. If not, the user equipment returns back to standby state (step 508). If the user equipment detects that the logical link may be ended, it instructs the participating user equipment to end the connection to the application node and ends (step 522) the local connections with the participating user equipment. The user equipment also ends (step 524) the first communication link to the application node.

Figure 6 shows a flow chart illustrating method according to the invention embodied in slave user equipment 121, 122 of Figure 2. The method of Figure 6 begins at the stage where establishment of the logical link between the first endpoint and the second endpoint has been triggered and master user equipment has been selected and operates as a control node for the operations. As in the method of Figure 5, the master user equipment has begun to check the possibilities for local communication with the other user equipment within its reach. Such determination is performed in a way typical for the type of connectivity used for local communication. When the user equipment in question detects (step 600) an attempt for local connection by the master, it generates and sends (step 602) an indication on its ability/willingness to participate to the joint communication associated with the logical link controlled by the master. For example, in case the local connection is implemented using Bluetooth technology, both the master user equipment and the slave user equipment are configured with a communication unit 435 for secondary Bluetooth communication, and an application that processes data streams or information blocks between the primary and secondary communication units. Master user equipment scanning its environment polls the potential participating user equipment, and forwards a challenge to participate in joint communication. The user equipment may be configured to request permission from the user of the user equipment, or make the decision to participate according to a defined authorization procedure, or both of these procedures may be performed consecutively. In response to its positive indication the user equipment receives (step 604) necessary instructions and information for the joined communication. This information includes at least the identity or address of the application node and identity of the logical link in question. The user equipment sets up a connection (step 606) through its connection unit of primary access type (remote access) to the application node, and another connection (step 608) through its connection unit of secondary access type (local access) to the control node, and becomes standby (step 610) for data streams associated with the logical link.

When the user equipment detects a data stream (step 612) associated with the logical link it identifies its source (step 614). If the data stream comes through the connection unit of secondary access type, the user equipment interprets it as an information block from the master, generates a remote message on the basis of the information block, and sends (step 616) the remote message to the application node over the connection of the primary access type. If the data stream comes through the connection unit of primary access type, the user equipment interprets it as an information block from the application node, generates a local message on the basis of the information block, and sends (step 618) the local message to the master over the connection of the secondary access type.

Again, after processing the data stream, the user equipment checks (step 620) whether there exists indication that the procedures related to the logical link should be ended. Reasons for ending the logical link may come form the logical link itself, as instructed by the master, or may be based on some internal reason within the user equipment itself. If the logical link procedures are not to be ended, the user equipment returns back to standby state (step 610). If the user equipment detects that the logical link should be ended, ends (step 622) the remote connection of the primary connection type to the application node, and ends (step 624) the local connection to the master.

It is appreciated that the functionality of the master and slave user equipment may be implemented in a variety of conventional user equipment by means of a downloadable application element, without essential changes to the basic configuration or protocols in use in the user equipment in question. All steps of the methods may be implemented automatically so that normal users may easily use the combined resource without essential need to control or understand the operations. Naturally some high-level commands, like 'start', 'stop', 'accept local connection?', etc. may be provided through the user interface of the user equipment, but in any case, the proposed solution provides a very straightforward method for combining transmission resources of dynamically determined group of user equipment.

Figure 7 illustrates the implementation of the described mechanisms in an application node. An application node may be any networked computer element that is accessible to the participating user equipment using their respective primary connectivity type. Advantageously an application node is also capable of accessing the charging interfaces of the participating user equipment for the purpose of generating charging records on the implemented operations. The application node of Figure 7 comprises a processing unit 710, an element that comprises an arithmetic logic unit, a number of special registers and control circuits. The processing unit may be implemented as a single integrated circuit or as a combination of a number of integrated circuits. Connected to the processing unit is a memory unit 715, a data medium where computer-readable data or programs or user data can be stored. The memory unit typically comprises storage elements that allow both reading and writing (RAM), and storage elements whose contents can only be read (ROM). The application node also comprises a user interface block 720 with input unit 725 for inputting data by the user for internal processing in the unit, and output means 730 for outputting user data from the internal processes of the unit. Examples of said input means comprise a keypad, or a touch screen, a microphone, or the like. Examples of said output means comprise a screen, a touch screen, a loudspeaker, or the like. Through the user interface block an administrator of the application node may control the operations of the application node and provision possible new users for the service.

The application also comprises a communication unit 735 configured with receiving unit 740 for receiving information from the network interface and processing it for inputting to the processing unit 710, as well as with transmitting unit 745 for receiving information from the processing unit 710, and processing it for sending via the network interface. The implementation of such a communication unit is generally known to a person skilled in the art. It is understood that for the purposes of the invention, at least one network connection through at least one access network needs to be supported by the application node. The connection type used for communication with the second endpoint is not relevant for the invention, so basically the application node may operate towards the first endpoint as well as towards the second endpoint through its own access network, the core network and any access network of the respective communicating party. The application node may also be arranged as part of the core network.

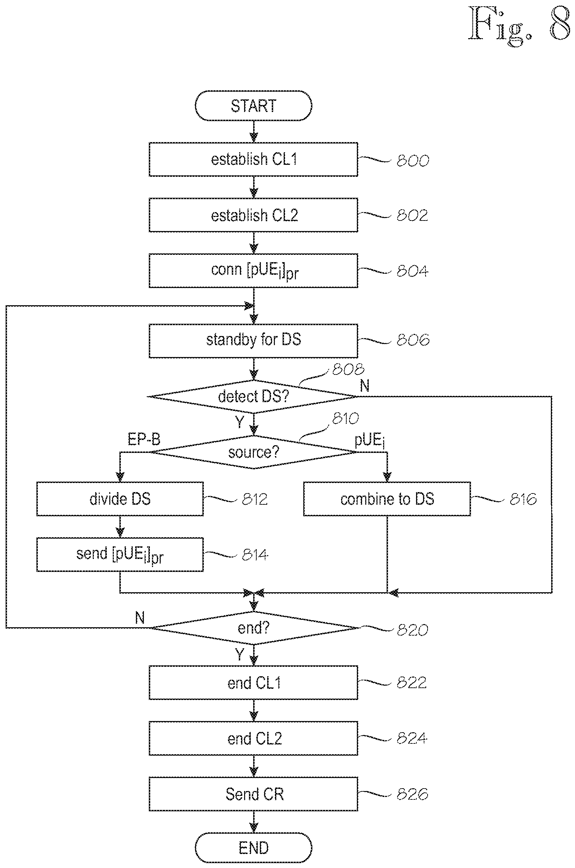

The processing unit 710, memory unit 715, user interface block 720, primary and secondary communication units 735, 750 are electrically interconnected for performing systematic execution of operations on the received and/or stored data according to predefined, essentially programmed processes of the unit. In a solution according to the invention, the operations comprise the functionality of the application node as will be described in the following in connection with Figure 8.

Figure 8 shows a flow chart illustrating a method according to the invention embodied in an application node 123 of Figure 2. In Figure 8, an exemplary case of master initiated communication is described in detail. It is appreciated that the logical link may be initiated by the application node, or by the second endpoint, as well, without deviating from the scope of protection. The method of Figure 8 begins at an exemplary stage where establishment of the logical link between the first endpoint and the second endpoint has been triggered by master user equipment. The master user equipment has polled the user equipment within its proximity and requests (step 800) establishment of a first communication link CL1. During the establishment procedure the master indicates at least one logical link, the second endpoint to which the logical link should be established, and the user equipment participating in the joint communication.

The application node establishes (step 802) the second communication link CL2 to the indicated second endpoint. According to the invention, the second endpoint may operate more or less normally, without needing to know that a mediating application node is operated in the logical link to the first endpoint. When the logical link is established, the application node sets up connections (step 804) to the participating user equipment. It is clear that the connection setup procedure may be initiated by the respective user equipment or by the application node. In the case where the application node operates through its own access network and core network, the application node does not necessarily need to know the access types of the respective participating user equipment, as long as they can access the application server through their own respective access networks and core network.

At this stage, the logical link is established and the combined transmission capacity in the first communication link is available for user, and the application node moves to standby (step 806) for data streams associated with the logical link. When the application node detects a data stream (step 808) associated with the logical link it identifies its source (step 810). If the data stream comes from the second endpoint, the application node interprets it a data stream for transmission. In this case the application node divides (step 812) the data stream into separate information blocks and sends these information blocks in separate messages to the participating user equipment. The information blocks may be similar, or they may be formed to match with the transmission resource available through different participating user equipment. If the data stream comes from any of the participating user equipment, the application node interprets it as an information block divided from the data stream associated with the logical link. The application node thus combines (step 816) the information block with the other information blocks received by it or by the other participating user equipment.

Again, after processing the data stream, the application node checks (step 820) whether there exists indication that the procedures related to the logical link should be ended. Reasons for ending the logical link may come from the second endpoint, from the first endpoint through the master user equipment, or may be based on some internal reason within the application node itself. If the logical link procedures are not to be ended, the application returns back to standby state (step 806). If the application node detects that the logical link should be ended, it ends (step 822) the separate connections to the participating user equipment, and ends (step 824) the connection to the second endpoint.

Acting as a mediator, the application node has access to essential data related to the logical link. Therefore, in a preferred embodiment, at ending the connections associated with the logical link, the application node creates one or more call records and sends them to the billing systems in the networks of the communicating parties. The call records may comprise mere facts on the operations, and the related charging logic is implemented in the billing systems responsible for the respective communicating parties. The call records may also be implemented such that the charging logic is included in the call records themselves. This allows dynamical adjustment of the charging operations. For example, the master may be provided with an option to select 'charge per subscriber basis' or 'charge master only'. In the first exemplary case, call records will be generated to the billing systems of each of the participating user, and in the second exemplary case, a call record will be generated to the billing system of the master user only. Further in the first exemplary case, the charges related to the joint operation may be adjusted to zero such that a record of the operations are visible to the users but the service itself appears toll-free.

Figure 9 illustrates other advantageous embodiments of the present invention. The other system elements in Figures 9A and 9B correspond with the elements of Figure 2 and, for conciseness, are not repeated in this description. In the embodiment of Figure 9a, however, the master 120 is shown as a thin client without much processing power and support only for local access. However, the master is configured to comprise a large screen 125. Advantageously, its available processing power is also by far dedicated to rendering of live video. In this exemplary embodiment, the participating user equipment 121, 122, 124 all operate as slaves, and feed information blocks received from the application node 123 over the air interface. The master 120 receives the information blocks over the local connections, compiles these information blocks into a video stream and outputs the video stream through its big screen in the location of the participating user equipment.

Further, in the embodiment of Figure 9a, the user of the master is an IMS-subscriber (IP Multimedia System). Advanced IMS releases allow users to register the same IMS public user identity from a number of items of user equipment. In addition, a user may indicate his or her preferences for single user equipment at the registration phase. Different registrations are differentiated using the IMS private user identity and the IP address in use. Thus, for example, the user with two different user equipment M1 and M2 with two different capabilities may at registration define preferences for the user equipment in use. For example, the user may define that an incoming session with a video component is directed to the primary user equipment M1, and other type of sessions to the secondary user equipment M2. In the first endpoint, an IMS subscriber that supports the joint communication of the present invention may thus define, that in an IMS session associated with the joint communication, the primary user equipment M1 is contacted first.

It is thus appreciated that the solution according to the invention provides for simple and straightforward ways to provide users with an increased transmission capacity and at the same time facilitate rendering with user equipment optimally adjustable for the content transferred over the enhanced connection.

In an aspect, the invention provides a computer program product encoding a computer program of instructions for executing a computer process.

In another aspect, the invention provides a computer program distribution medium readable by a computer and encoding a computer program of instructions for executing a computer process.

The distribution medium may include a computer readable medium, a program storage medium, a record medium, a computer readable memory, a computer readable software distribution package, a computer readable signal, a computer readable telecommunications signal, and/or a computer readable compressed software package.

Embodiments of the computer process are shown and described in conjunction the attached signaling and flow charts. The computer program may be executed in the processing unit of the respective apparatus.

It will be obvious to a person skilled in the art that, as the technology advances, the inventive concept can be implemented in various ways. The invention and its embodiments are not limited to the examples described above but may vary within the scope of the claims.

## Claims

1. A method of communicating between a first endpoint and a second endpoint, **characterized by** the method comprising:
determining (302) in a first endpoint a control node and one or more participating user equipment, a participating user equipment being configured with a functionality to operate primary connections of at least one primary connection type and secondary connections of at least one secondary connection type;
establishing (304) a first communication link between the control node and a serving node using a primary connection;
establishing (306) a second communication link between the serving node and a second endpoint;
creating (310) separate primary connections between the participating user equipment and the serving node using the respective primary connection type of each participating user equipment;
creating (308) secondary connections between the control node and the participating user equipment using the respective secondary connection type of each participating user equipment;
operating (314) the first communication link by dividing in the first communication link data streams into separate information blocks and delivering the information blocks over the separate primary connections between the participating user equipment and the serving node, and delivering the information blocks over the secondary connections between the control node and the participating user equipment,
wherein the information blocks are formed to match with a transmission resource available through different participating user equipment.

2. A method according to claim 1, **characterized by** further comprising
creating the separate primary connections between the participating user equipment and the serving node using at least two different primary connection types.

3. A method according to claim 1 or 2, **characterized by** further comprising creating secondary connections between the control node and the participating user equipment using at least two different secondary connection types.

4. A system comprising:
a first endpoint (101) comprising a control node (120) and one or more participating user equipments (121, 122);
a second endpoint (102),
a network infrastructure (103) configured to interconnect the first and the second endpoints, **characterized by**
a serving node (123) remotely accessible to the participating user equipment (121, 122); and configured to establish a first communication link with the control node (120) and a second communication link with the second endpoint (102), each communication link associated with a logical communication link between the first endpoint (101) and the second endpoint (102),
the first communication link is configured to comprise primary connections of at least one primary connection type of participating user equipment (121, 122) and secondary connections of at least one secondary connection type of the participating user equipment (120, 121, 122); and
the system is configured to operate by dividing a data stream (110) of the logical communication link in the first communication link into separate information blocks (112, 113, 114) and deliver the separate information blocks (112, 113, 114) over the primary connections between the participating user equipment (121, 122) and the serving node (123) and over the secondary connections between the control node (120) and the participating user equipment (121, 122); and combine the received information blocks (112, 113, 114) into a received data stream (110) of the logical communication link, wherein the information blocks are formed to match with a transmission resource available through different participating user equipment.

5. A system according to claim 4, **characterized in that** the control node (120) is one of the participating user equipment (120, 121, 122).

6. A system according to claim 4, **characterized in that** the control node is a separate terminal (125) without remote access capability.

7. A communication device, **characterized by** the device comprising
a communication unit (450) for implementing connections of at least one connection type one or more communication devices;
a control unit (410) configured to
determine one or more user equipment accessible with the connection type and ready to operate as a participating user equipment;
create separate connections of the one connection type to the participating user equipment;
establish a logical communication link to a second endpoint by creating a first communication link associated with the logical communication link to a serving node;
divide a data stream of the logical communication link into separate information blocks and deliver the separate information blocks over the separate connections to the participating user equipment for transmission to the serving node; and
combine information blocks received over the separate connections from the participating user equipment into a received data stream of the logical communication link,
wherein the information blocks are formed to match with a transmission resource available through different participating user equipment.

8. A device according to claim 7, **characterized in that** the device is further configured to operate as one of the participating user equipment.

9. A device according to claim 7, **characterized in that** the device is a terminal equipment without support for the primary connection type.

10. A communication device, comprising
a primary communication unit (435) for implementing primary connections of at least one primary connection type;
a secondary communication unit (450) for implementing secondary connections of at least one secondary connection type;
a control unit (410) configured to
indicate over a secondary connection to a control node readiness to operate as a participating user equipment in a first communication link between the control node and a serving node accessible to the communication device over the primary connection type;
create a primary connection associated with the first communication link to the serving node;
transmit information blocks received from the control node over the secondary connection to the serving node over the created primary connection; and
transmit information blocks received over the created primary connection to the control node over the secondary connection,
wherein the information blocks are formed to match with a transmission resource available through different participating user equipment.

11. A serving node, **characterized by** the server comprising:
a communication unit (735);
a control unit (710) configured to
establish a first communication link to a control terminal in a first endpoint, and a second communication link to a second endpoint, each link associated with a logical communication link between the first endpoint and the second endpoint,
create separate connections associated with the first communication link to one or more participating user equipment of the first endpoint;
divide a data stream of the logical communication link for transmission in the first communication link into separate information blocks and deliver the separate information blocks over the primary connections to and from the participating user equipment; and
combine the received information blocks into a received data stream of the logical communication link,
wherein the information blocks are formed to match with a transmission resource available through different participating user equipment.

12. A serving node according to claim 11, **characterized in that** the control unit is configured to establish the second communication link to the second endpoint through a network infrastructure that comprises a core network (104) and one or more access networks (105, 106), the second endpoint locating in the same access network than the serving node.

13. A serving node according to claim 12, **characterized in that** the control unit is configured to operate also as the second endpoint.

14. A serving node according to claim 11, **characterized in that** the control unit is configured to establish the second communication link to the second endpoint through a network infrastructure (103) that comprises a core network (104) and one or more access networks (105, 106), the second endpoint locating in a different access network than the serving node.

15. A computer program product encoding a computer process of instructions for executing a computer process for communicating between a first endpoint and a second endpoint, **characterized by** the computer program product comprising:
determining in a first endpoint a control node and one or more participating user equipment, a participating user equipment being configured with a functionality to operate primary connections of at least one primary connection type and secondary connections of at least one secondary connection type;
establishing a first communication link between the control terminal and a serving node using a primary connection;
establishing a second communication link between the serving node and a second endpoint;
creating separate primary connections between the participating user equipment and the serving node using the respective primary connection type of each participating user equipment;
creating secondary connections between the control node and the participating user equipment using the respective secondary connection type of each participating user equipment;
dividing in the first communication link data streams into separate information blocks and delivering the information blocks over the separate primary connections between the participating user equipment and the serving node, and delivering the information blocks over the secondary connections between the control node and the participating user equipment,
wherein the information blocks are formed to match with a transmission resource available through different participating user equipment.

## Patentansprüche

1. Verfahren zum Kommunizieren zwischen einem ersten Endpunkt und einem zweiten Endpunkt, **dadurch hgekennzeichnet, dass** das Verfahren umfasst:
Bestimmen (302), in einem ersten Endpunkt, eines Steuerknotens und eines oder mehrerer teilnehmender Endgeräte, wobei ein teilnehmendes Endgerät mit einer Funktionalität zum Betreiben primärer Verbindungen mindestens eines primären Verbindungstyps und sekundärer Verbindungen mindestens eines sekundären Verbindungstyps eingerichtet ist;
Herstellen (304) einer ersten Kommunikations-Strecke zwischen dem Steuerknoten und einem Server-Knoten unter Verwendung einer primären Verbindung;
Herstellen (306) einer zweiten Kommunikations-Strecke zwischen dem Server-Knoten und einem zweiten Endpunkt;
Erstellen (310) separater primärer Verbindungen zwischen den teilnehmenden Endgeräten und dem Server-Knoten unter Verwendung des jeweiligen primären Verbindungstyps jedes teilnehmenden Endgeräts;
Erstellen (308) sekundärer Verbindungen zwischen dem Steuerknoten und den teilnehmenden Endgeräten unter Verwendung des jeweiligen sekundären Verbindungstyps jedes teilnehmenden Endgeräts;
Betreiben (314) der ersten Kommunikations-Strecke durch Unterteilen von Datenströmen in der ersten Kommunikations-Strecke in separate Informationsblöcke und Ausliefern der Informationsblöcke über die separaten primären Verbindungen zwischen den teilnehmenden Endgeräten und dem Server-Knoten und Ausliefern der Informationsblöcke über die sekundären Verbindungen zwischen dem Steuerknoten und den teilnehmenden Endgeräten, wobei die Informationsblöcke derart gebildet sind, dass sie zu einer Übertragungs-Ressource passen, die durch verschiedene teilnehmende Endgeräte verfügbar ist.

2. Verfahren nach Anspruch 1, **dadurch gekennzeichnet, dass** es ferner umfasst:
Erstellen der separaten primären Verbindungen zwischen den teilnehmenden Endgeräten und dem Server-Knoten unter Verwendung von mindestens zwei verschiedenen primären Verbindungstypen.

3. Verfahren nach Anspruch 1 oder 2, **dadurch gekennzeichnet, dass** es ferner umfasst: Erstellen sekundärer Verbindungen zwischen dem Steuerknoten und den teilnehmenden Endgeräten unter Verwendung von mindestens zwei verschiedenen sekundären Verbindungstypen.

4. System, umfassend:
einen ersten Endpunkt (101), der einen Steuerknoten (120) und ein oder mehrere teilnehmende Endgeräte (121, 122) umfasst;
einen zweiten Endpunkt (102),
eine Netzwerk-Infrastruktur (103), die dazu eingerichtet ist, den ersten Endpunkt und den zweiten Endpunkt untereinander zu verbinden, **gekennzeichnet durch**
einen Server-Knoten (123), der für die teilnehmenden Endgeräte (121, 122) fernzugreifbar ist und dazu eingerichtet ist, eine erste Kommunikations-Strecke mit dem Steuerknoten (120) und eine zweite Kommunikations-Strecke mit dem zweiten Endpunkt (102) herzustellen, wobei jede Kommunikations-Strecke mit einer logischen Kommunikations-Strecke zwischen dem ersten Endpunkt (101) und dem zweiten Endpunkt (102) verknüpft ist,
die erste Kommunikations-Strecke dazu eingerichtet ist, primäre Verbindungen mindestens eines primären Verbindungstyps von teilnehmenden Endgeräten (121, 122) und sekundäre Verbindungen mindestens eines zweiten Verbindungstyps der teilnehmenden Endgeräte (120, 121, 122) zu umfassen; und
das System dazu eingerichtet ist, im Betrieb einen Datenstrom (110) der logischen Kommunikations-Strecke in der ersten Kommunikations-Strecke in separate Informationsblöcke (112, 113, 114) zu unterteilen und die separaten Informationsblöcke (112, 113, 114) über die primären Verbindungen zwischen den teilnehmenden Endgeräten (121, 122) und dem Server-Knoten (123) und über die sekundären Verbindungen zwischen dem Steuerknoten (120) und den teilnehmenden Endgeräten (121, 122) auszuliefern; und die empfangenen Informationsblöcke (112, 113, 114) in einen empfangenen Datenstrom (110) der logischen Kommunikations-Strecke zu kombinieren, wobei die Informationsblöcke derart gebildet sind, dass sie zu einer Übertragungs-Ressource passen, die durch verschiedene teilnehmende Endgeräte verfügbar ist.

5. System nach Anspruch 4, **dadurch gekennzeichnet, dass** der Steuerknoten (120) eines der teilnehmenden Endgeräte (120, 121, 122) ist.

6. System nach Anspruch 4, **dadurch gekennzeichnet, dass** der Steuerknoten ein separates Terminal (125) ohne Fernzugriffsfunktionalität ist.

7. Kommunikationseinrichtung, **dadurch gekennzeichnet, dass** die Einrichtung umfasst:
eine Kommunikationseinheit (450) zum Implementieren von Verbindungen mindestens eines Verbindungstyps einer oder mehrerer Kommunikationseinrichtungen;
eine Steuereinheit (410), die dazu eingerichtet ist,
ein oder mehrere Endgeräte zu bestimmen, die mit dem Verbindungstyp zugänglich sind und als teilnehmende Endgeräte betriebsbereit sind.
separate Verbindungen des einen Verbindungstyps mit den teilnehmenden Endgeräten zu erstellen;
eine logische Kommunikations-Strecke zu einem zweiten Endpunkt durch Erstellen einer mit der logischen Kommunikations-Strecke verknüpften ersten Kommunikations-Strecke zu einem Server-Knoten herzustellen;
einen Datenstrom der logischen Kommunikations-Strecke in separate Informationsblöcke zu unterteilen und die separaten Informationsblöcke über die separaten Verbindungen zu den teilnehmenden Endgeräten zur Übertragung an den Server-Knoten auszuliefern; und
über die separaten Verbindungen von den teilnehmenden Endgeräten empfangene Informationsblöcke zu einem empfangenen Datenstrom der logischen Kommunikations-Strecke zu kombinieren,
wobei die Informationsblöcke derart gebildet sind, dass sie zu einer durch verschiedene teilnehmende Endgeräte verfügbaren Übertragungs-Ressource passen.

8. Einrichtung nach Anspruch 7, **dadurch gekennzeichnet, dass** die Einrichtung ferner dazu eingerichtet ist, als eines der teilnehmenden Endgeräte betrieben zu werden.

9. Einrichtung nach Anspruch 7, **dadurch gekennzeichnet, dass** die Einrichtung eine Teilnehmerendeinrichtung ohne Unterstützung für den primären Verbindungstyp ist.

10. Kommunikationseinrichtung, umfassend
eine primäre Kommunikationseinheit (435) zum Implementieren primärer Verbindungen mindestens eines primären Verbindungstyps;
eine sekundäre Kommunikationseinheit (450) zum Implementieren sekundärer Verbindungen mindestens eines sekundären Verbindungstyps;
eine Steuereinheit (410), die dazu eingerichtet ist,
über eine sekundäre Verbindung zu einem Steuerknoten Bereitschaft zum Betrieb als teilnehmendes Endgerät in einer ersten Kommunikations-Strecke zwischen dem Steuerknoten und einem der Kommunikationseinrichtung über den primären Verbindungstyp zugänglichen Server-Knoten anzuzeigen;
eine primäre Verbindung zu erzeugen, die mit der ersten Kommunikations-Strecke zu dem Server-Knoten verknüpft ist;
von dem Steuerknoten über die sekundäre Verbindung empfangene Informationsblöcke über die erstellte primäre Verbindung an den Server-Knoten zu übertragen; und
über die erstellte primäre Verbindung empfangene Informationsblöcke über die sekundäre Verbindung an den Steuerknoten zu übertragen,
wobei die Informationsblöcke derart gebildet sind, dass sie zu einer Übertragungs-Ressource passen, die durch verschiedene teilnehmende Endgeräte verfügbar ist.

11. Server-Knoten, **dadurch gekennzeichnet, dass** der Server umfasst:
eine Kommunikationseinheit (735);
eine Steuereinheit (710), die dazu eingerichtet ist;
eine erste Kommunikations-Strecke zu einem Steuer-Terminal in einem ersten Endpunkt und eine zweite Kommunikations-Strecke zu einem zweiten Endpunkt herzustellen, wobei jede Strecke mit einer logischen Kommunikations-Strecke zwischen dem ersten Endpunkt und dem zweiten Endpunkt verknüpft ist;
separate Verbindungen, die mit der ersten Kommunikations-Strecke verknüpft sind, zu einem oder mehreren teilnehmenden Endgeräten des ersten Endpunkts zu erstellen;
einen Datenstrom der logischen Kommunikations-Strecke zur Übertragung in der ersten Kommunikations-Strecke in separate Informationsblöcke zu unterteilen und die separaten Informationsblöcke über die primären Verbindungen zu und von den teilnehmenden Endgeräten auszuliefern; und
die empfangenen Informationsblöcke in einen empfangenen Datenstrom der logischen Kommunikations-Strecke zu kombinieren,
wobei die Informationsblöcke derart gebildet sind, dass sie zu einer Übertragungs-Ressource passen, die durch verschiedene teilnehmende Endgeräte verfügbar ist.

12. Server-Knoten nach Anspruch 11, **dadurch gekennzeichnet, dass** die Steuereinheit dazu eingerichtet ist, die zweite Kommunikations-Strecke zu dem zweiten Endpunkt durch eine Netzwerk-Infrastruktur herzustellen, die ein Kern-Netzwerk (104) und ein oder mehrere Zugangsnetzwerke (105, 106) umfasst, wobei der zweite Endpunkt in demselben Zugangsnetzwerk wie der Server-Knoten angeordnet ist.

13. Server-Knoten nach Anspruch 12, **dadurch gekennzeichnet, dass** die Steuereinheit dazu eingerichtet ist, auch als der zweite Endpunkt betrieben zu werden.

14. Server-Knoten nach Anspruch 11, **dadurch gekennzeichnet, dass** die Steuereinheit dazu eingerichtet ist, die zweite Kommunikations-Strecke zu dem zweiten Endpunkt durch eine Netzwerk-Infrastruktur (103) herzustellen, die ein Kern-Netzwerk (104) und ein oder mehrere Zugangsnetzwerke (105, 106) umfasst, wobei der zweite Endpunkt in einem anderen Zugangsnetzwerk als der Server-Knoten angeordnet ist.

15. Computerprogrammprodukt, welches einen Computerprozess aus Anweisungen zum Ausführen eines Computerprozesses zum Kommunizieren zwischen einem ersten Endpunkt und einem zweiten Endpunkt codiert, **dadurch gekennzeichnet, dass** das Computerprogrammprodukt umfasst:
Bestimmen, in einem ersten Endpunkt, eines Steuerknotens und eines oder mehrerer teilnehmender Endgeräte, wobei ein teilnehmendes Endgerät mit einer Funktionalität zum Betreiben primärer Verbindungen mindestens eines primären Verbindungstyps und sekundärer Verbindungen mindestens eines sekundären Verbindungstyps eingerichtet ist;
Herstellen einer ersten Kommunikations-Strecke zwischen dem Steuer-Terminal und einem Server-Knoten unter Verwendung einer primären Verbindung;
Herstellen einer zweiten Kommunikations-Strecke zwischen dem Server-Knoten und einem zweiten Endpunkt;
Erstellen separater primärer Verbindungen zwischen den teilnehmenden Endgeräten und dem Server-Knoten unter Verwendung des jeweiligen primären Verbindungstyps jedes teilnehmenden Endgeräts;
Erstellen sekundärer Verbindungen zwischen dem Steuerknoten und den teilnehmenden Endgeräten unter Verwendung des jeweiligen sekundären Verbindungstyps jedes teilnehmenden Endgeräts;
Unterteilen von Datenströmen in der ersten Kommunikations-Strecke in separate Informationsblöcke und Ausliefern der Informationsblöcke über die separaten primären Verbindungen zwischen den teilnehmenden Endgeräten und dem Server-Knoten und Ausliefern der Informationsblöcke über die sekundären Verbindungen zwischen dem Steuerknoten und den teilnehmenden Endgeräten, wobei die Informationsblöcke derart gebildet sind, dass sie zu einer Übertragungs-Ressource passen, die durch verschiedene teilnehmende Endgeräte verfügbar ist.

## Revendications

1. Procédé de communication entre un premier point d'extrémité et un second point d'extrémité, **caractérisé en ce que** le procédé comprend les étapes consistant à :
déterminer (302) dans un premier point d'extrémité un noeud de commande et un ou plusieurs équipements utilisateurs participatifs, un équipement utilisateur participatif étant configuré d'une fonctionnalité pour actionner des connexions primaires d'au moins un type de connexion primaire et des connexions secondaires d'au moins un type de connexion secondaire ;
établir (304) une première liaison de communication entre le noeud de commande et un noeud de service en utilisant une connexion primaire ;
établir (306) une seconde liaison de communication entre le noeud de service et un second point d'extrémité ;
créer (310) des connexions primaires séparées entre l'équipement utilisateur participatif et le noeud de service en utilisant le type de connexion primaire respectif de chaque équipement utilisateur participatif ;
créer (308) des connexions secondaires entre le noeud de commande et l'équipement utilisateur participatif en utilisant le type de connexion secondaire respectif de chaque équipement utilisateur participatif ;
activer (314) la première liaison de communication en divisant dans la première liaison de communication des flux de données en blocs d'informations séparés et délivrer les blocs d'informations sur les connexions primaires séparées entre l'équipement utilisateur participatif et le noeud de service, et délivrer les blocs d'informations sur les connexions secondaires entre le noeud de commande et l'équipement utilisateur participatif,
dans lequel les blocs d'informations sont formés pour correspondre à une ressource de transmission disponible à travers différents équipements utilisateurs participatifs.

2. Procédé selon la revendication 1, **caractérisé en ce qu'**il comprend en outre la création des connexions primaires séparées entre l'équipement utilisateur participatif et le noeud de service en utilisant au moins deux types de connexion primaire différents.

3. Procédé selon la revendication 1 ou 2, **caractérisé en ce qu'**il comprend en outre la création de connexions secondaires entre le noeud de commande et l'équipement utilisateur participatif en utilisant au moins deux types de connexion secondaire différents.

4. Système comprenant :
un premier point d'extrémité (101) comprenant un noeud de commande (120) et un ou plusieurs équipements utilisateurs participatifs (121, 122);
un second point d'extrémité (102),
une infrastructure de réseau (103) configurée pour interconnecter les premier et second points d'extrémité, **caractérisés par**
un noeud de service (123) pouvant accéder à distance à l'équipement utilisateur participatif (121, 122) ; et configuré pour établir une première liaison de communication avec le noeud de commande (120) et une seconde liaison de communication avec le second point d'extrémité (102), chaque liaison de communication étant associée à une liaison de communication logique entre le premier point d'extrémité (101) et le second point d'extrémité (102),
la première liaison de communication est configurée pour comprendre des connexions primaires d'au moins un type de connexion primaire de l'équipement utilisateur participatif (121, 122) et des connexions secondaires d'au moins un type de connexion secondaire de l'équipement utilisateur participatif (120, 121, 122) ; et
le système est configuré pour fonctionner en divisant un flux de données (110) de la liaison de communication logique dans la première liaison de communication en blocs d'informations séparés (112, 113, 114) et délivrer les blocs d'informations séparés (112, 113, 114) sur les connexions primaires entre l'équipement utilisateur participatif (121, 122) et le noeud de service (123) et sur les connexions secondaires entre le noeud de commande (120) et l'équipement utilisateur participatif (121, 122) ; et combiner les blocs d'information reçus (112, 113, 114) en un flux de données reçu (110) de la liaison de communication logique, dans lequel les blocs d'informations sont formés pour correspondre à une ressource de transmission disponible à travers différents équipements utilisateurs participatifs.

5. Système selon la revendication 4, **caractérisé en ce que** le noeud de commande (120) est l'un des équipements utilisateurs participatifs (120, 121, 122).

6. Système selon la revendication 4, **caractérisé en ce que** le noeud de commande est un terminal séparé (125) sans capacité d'accès à distance.

7. Dispositif de communication, **caractérisé par** le dispositif comprenant
une unité de communication (450) pour implémenter des connexions d'au moins un type de connexion à un ou plusieurs dispositifs de communication;
une unité de commande (410) configurée pour
déterminer un ou plusieurs équipements utilisateurs accessibles avec le type de connexion et prêts à fonctionner comme équipement utilisateur participatif ; créer des connexions séparées du type de connexion à l'équipement utilisateur participatif ;
établir une liaison de communication logique jusqu'à un second point d'extrémité en créant une première liaison de communication associée à la liaison de communication logique jusqu'à un noeud de service ;
diviser un flux de données de la liaison de communication logique en blocs d'informations séparés et délivrer les blocs d'informations séparés sur les connexions séparées dans l'équipement utilisateur participatif pour une transmission au noeud de service ; et
combiner des blocs d'informations reçus sur les connexions séparées depuis l'équipement utilisateur participatif en un flux de données reçu de la liaison de communication logique,
dans lequel les blocs de formation sont formés pour correspondre à une ressource de transmission disponible à travers différents équipements utilisateurs participatifs.

8. Dispositif selon la revendication 7, **caractérisé en ce que** le dispositif est en outre configuré pour fonctionner comme l'un des équipements utilisateurs participatifs.

9. Dispositif selon la revendication 7, **caractérisé en ce que** le dispositif est un équipement terminal sans support pour le type de connexion primaire.

10. Dispositif de communication, comprenant
une unité de communication primaire (435) pour implémenter des connexions primaires d'au moins un type de connexion primaire ;
une unité de communication secondaire (450) pour implémenter des connexions secondaires d'au moins un type de connexion secondaire;
une unité de commande (410) configurée pour
indiquer sur une connexion secondaire à un noeud de commande la possibilité de fonctionner comme un équipement utilisateur participatif dans une première liaison de communication entre le noeud de commande et un noeud de service pouvant accéder au dispositif de communication sur le type de connexion primaire ;
créer une connexion primaire associée à la première liaison de communication avec le noeud de service ;
transmettre des blocs d'informations reçus depuis le noeud de commande sur la connexion secondaire dans le noeud de service sur la connexion primaire créée; et
transmettre des blocs d'informations reçus sur la connexion primaire créée dans le noeud de commande sur la connexion secondaire,
dans lequel les blocs d'informations sont formés pour correspondre à une ressource de transmission disponible à travers différents équipements utilisateurs participatifs.

11. Noeud de service, **caractérisé par** le serveur comprenant:
une unité de communication (735) ;
une unité de commande (710) configurée pour
établir une première liaison de communication avec un terminal de commande dans un premier point d'extrémité, et une seconde liaison de communication avec un second point d'extrémité, chaque liaison étant associée à une liaison de communication logique entre le premier point d'extrémité et le second point d'extrémité,
créer des connexions séparées associées à la première liaison de communication avec un ou plusieurs équipements utilisateurs participatifs du premier point d'extrémité ;
diviser un flux de données de la liaison de communication logique pour une transmission dans la première liaison de communication en blocs d'informations séparés et délivrer les blocs d'informations séparés sur les connexions primaires vers et depuis l'équipement utilisateur participatif ; et
combiner les blocs d'information reçus en un flux de données reçu de la liaison de communication logique,
dans lequel les blocs d'informations sont formés pour correspondre à une ressource de transmission disponible à travers différents équipements utilisateurs participatifs.

12. Noeud de service selon la revendication 11, **caractérisé en ce que** l'unité de commande est configurée pour établir la seconde liaison de communication avec le second point d'extrémité par l'intermédiaire d'une infrastructure de réseau qui comprend un réseau central (104) et un ou plusieurs réseaux d'accès (105, 106), le second point d'extrémité se trouvant dans le même réseau d'accès que le noeud de service.

13. Noeud de service selon la revendication 12, **caractérisé en ce que** l'unité de commande est configurée pour fonctionner également comme second point d'extrémité.

14. Noyau de service selon la revendication 11, **caractérisé en ce que** l'unité de commande est configurée pour établir la seconde liaison de communication avec le second point d'extrémité par l'intermédiaire d'une infrastructure de réseau (103) qui comprend un réseau central (104) et un ou plusieurs réseaux d'accès (105, 106), le second point d'extrémité se trouvant dans un réseau d'accès différent de celui du noeud de service.

15. Produit de programme informatique codant un processus informatique d'instructions pour exécuter un processus informatique afin de communiquer entre un premier point d'extrémité et un second point d'extrémité, **caractérisé en ce que** le produit de programme informatique comprend les étapes consistant à :
déterminer dans un premier point d'extrémité un noeud de commande et un ou plusieurs équipements utilisateurs participatifs, un équipement utilisateur participatif étant configuré d'une fonctionnalité pour activer des connexions primaires d'au moins un type de connexion primaire et des connexions secondaires d'au moins un type de connexion secondaire ;
établir une première liaison de communication entre le terminal de commande et un noeud de service en utilisant une connexion primaire ;
établir une seconde liaison de communication entre le noeud de service et un second point d'extrémité ;
créer des connexions primaires séparées entre l'équipement utilisateur participatif et le noeud de service en utilisant le type de connexion primaire respectif de chaque équipement utilisateur participatif ;
créer des connexions secondaires entre le noeud de commande et l'équipement utilisateur participatif en utilisant le type de connexion secondaire respectif de chaque équipement utilisateur participatif ;
diviser dans la première liaison de communication des flux de données en blocs d'informations séparés et délivrer les blocs d'informations sur les connexions primaires séparées entre l'équipement utilisateur participatif et le noeud de service, et délivrer les blocs d'informations sur les connexions secondaires entre le noeud de commande et l'équipement utilisateur participatif,
dans lequel les blocs d'information sont formés pour correspondre à une ressource de transmission disponible à travers différents équipements utilisateurs participatifs.
